# FASCICULE DE BREVET EUROPEEN

(11) **EP 0 649 446 B1**
(45) Date de publication et mention de la délivrance du brevet: **15.12.1999**
(21) Numéro de dépôt: 93915812.7
(22) Date de dépôt: 06.07.1993
(51) Int. Cl.: C08L 61/00, C08L 21/00

(54) **PROCEDE ET COMPOSITION PERMETTANT L'EMPLOI DE MELAMINES SUBSTITUEES COMME DURCISSEURS DE RESINES NOVOLAQUES**
VERFAHREN UND ZUSAMMENSETZUNG DASS VERWENDUNG VON SUBSTITUIERTEN MELAMINE ALS HÄRTER FÜR NOVOLAC-HARZE ERMÖGLICHT
METHOD AND COMPOSITION FOR USING SUBSTITUTED MELAMINES AS NOVOLAK RESIN CURING AGENTS

(30) Priorité: 08.07.1992 FR 9208571
(43) Date de publication de la demande: 26.04.1995
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: CHAUVIN, Brigitte, Marie, F-63400 Chamalières (FR); DUREL, Olivier, F-63112 Blanzat (FR)
(74) Mandataire: Ribière, Joel
(86) Numéro de dépôt international: EP9301747
(87) Numéro de publication internationale: WO9401493

(56) Documents cités:
- EP-A- 0 013 330
- EP-A- 0 036 515
- EP-A- 0 197 395
- EP-A- 0 443 792
- EP-A- 0 545 445

## Description

L'invention concerne les résines novolaques, et plus particulièrement les sytèmes permettant le durcissement de ces résines.

De façon connue, on entend par "résine novolaque" un précondensat à base d'au moins un phénol, ou un dérivé du phénol, et d'au moins un aldéhyde.

De telles résines sont utilisées par exemple dans les préparations de caoutchoucs, et notamment dans les préparations de caoutchoucs servant à la réalisation d'articles divers, en particulier des courroies, des tuyaux, des enveloppes de pneumatiques comme décrit par exemple dans US-A-5 021 522 correspondant au document EP-A-443792. Il est connu que l'emploi de ces résines associées à des durcisseurs permet de renforcer les préparations de caoutchoucs en apportant aux mélanges, après cuisson, de la dureté et des modules élevés aux faibles déformations. D'après les connaissances de l'art, le renforcement par ce type de résine est expliqué par la formation au sein des caoutchoucs d'un réseau tridimensionnel obtenu par réaction de la résine novolaque avec le durcisseur qui est le plus souvent un donneur de méthylène.

Le donneur de méthylène le plus utilisé pour réticuler les résines novolaques est l'hexaméthylène tétramine (HMTA). Cependant l'HMTA présente les inconvénients suivants :
- elle pose des problèmes d'hygiène et de sécurité comme noté dans l'article "Adhésion caoutchouc/métal ; systèmes RFS : HMT ou HMMM ?" Ph. Combette et F. Alarcon-Lorca, Caoutchoucs et Plastiques n° 683 - Décembre 1988 - pp. 103 à 107 ;
- lorsqu'on utilise des résines novolaques avec de l'HMTA, en présence de caoutchoucs destinés à coller à des renforts métalliques, il peut se produire une déchéance de ce collage, probablement par suite d'une libération d'ammoniac, comme cela est décrit dans l'article suivant : "Adhérence des câblés d'acier dans les pneumatiques" de Klaus-Dieter Albrecht et Theo Kempermann, Inform.Bayer pour l'Ind. Caoutch. n° 53, 1981, pp. 13-25.

Pour éviter ces inconvénients, on a tenté de remplacer comme durcisseur l'HMTA par un autre donneur de méthylène, l'hexa(méthoxyméthyl)mélamine (H3M), comme indiqué dans les deux documents précités, qui présente des inconvénients moindres, par suite d'une libération de méthanol, au lieu d'ammoniac, lors de la cuisson du caoutchouc. Cependant, l'emploi du H3M présente l'inconvénient industriel majeur de ralentir considérablement la vitesse de rigidification des compositions contenant des caoutchoucs vulcanisant au soufre comme décrit dans le bulletin "ARAX EKM" de la Société Enichem Synthesis.

EP-A-197395 décrit des compositions comprenant un caoutchouc, par exemple du caoutchouc naturel, une résine novolaque, un durcisseur tel que l'hexaméthoxyméthylmélamine, et un caoutchouc polaire, par exemple un polyuréthanne. Ces compositions permettent d'atteindre, après vulcanisation, des rigidités élevées, mais présentent toujours des vitesses de réaction de rigidification faibles.

Le but de l'invention est de proposer un procédé, et une composition de résines, qui permettent l'emploi de mélamines substituées comme durcisseurs de résines novolaques, tout en donnant une vitesse élevée pour la rigidification des compositions contenant ces résines, et un niveau élevé de propriétés mécaniques, sans présenter de problème d'hygiène.

Le procédé conforme à l'invention pour durcir une composition contenant au moins une résine novolaque est conforme à la revendication 1.

L'invention concerne également une composition durcissable conforme à la revendication 14.

Les résines novolaques sont constituées par toutes les résines réalisées par condensation d'au moins un composé phénolique, choisi dans le groupe constitué par le phénol et les dérivés du phénol, avec au moins un aldéhyde.

Les dérivés du phénol utilisés conformément à l'invention peuvent comporter un ou plusieurs cycles aromatiques et/ou une ou plusieurs fonctions phénols. De tels dérivés peuvent comporter en outre des groupements chimiques autres que phénoliques par exemple des groupements alkyles, alcényles, alcynyles, amines, alcoxy, esters. De tels dérivés sont par exemple le méta-aminophénol, le méta-méthoxyphénol, le β-naphtol.

Les aldéhydes utilisés conformément à l'invention comportent au moins une fonction aldéhyde. Ces aldéhydes peuvent être aliphatiques, cycliques ou aromatiques, notamment le formaldéhyde, l'acétaldéhyde, le propionaldéhyde, le butyraldéhyde, le crotonaldéhyde, le cinnamaldéhyde, le benzaldéhyde, le furfural.

De telles résines novolaques correspondent notamment aux types suivants :
phénol/formol, phénol modifié/formol, phénol/aldéhyde autre que le formol, phénol/formol/aldéhyde autre que le formol, résorcine/formol, résorcine modifiée/formol.

On peut utiliser une de ces résines, ou un mélange d'au moins deux de telles résines.

Le ou les durcisseurs a) ont la formule : 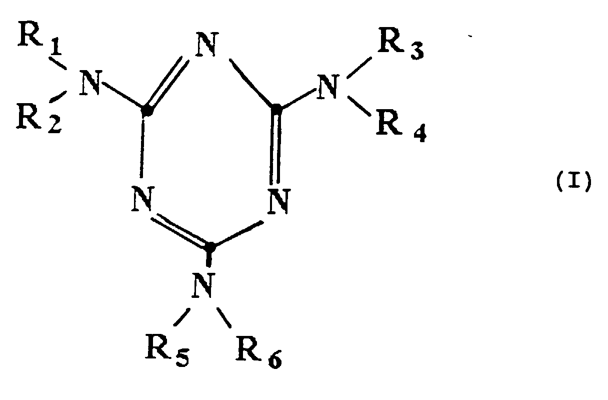 dans laquelle R₁, R₂, R₃, R₄, R₅ et R₆, identiques ou différents, sont choisis chacun dans le groupe constitué par -H, -CH₂OH, -CH₂OCH₃,-CH₂OCH₂OCH₃, au moins un des R₁ à R₆ étant différent de l'hydrogène.

De tels composés sont notamment l'hexa(méthoxyméthyl)mélamine encore appelée l'hexaméthylolmélamine-hexaméthyléther (H3M), l'hexaméthylolmélamine-pentaméthyléther, la pentaméthylolmélamine-pentaméthyléther, la pentaméthylolmélamine-tétraméthyléther, la tétraméthylolmélamine-tétraméthyléther, la triméthylolmélamine-triméthyléther.

On peut utiliser une seule mélamine substituée, ou un mélange d'au moins deux mélamines substituées, comportant notamment le H3M. De tels mélanges commerciaux ont par exemple les dénominations suivantes : CYREZ ® 963 de American Cyanamid, COHEDUR ® A de Bayer, VXT 3911 de Hoechst, XR 14117 de CECA, SUMIKANOL ® 508 de Sumitomo, RESIMENE @ 3520 de Monsanto, ARAX EKM d'Enichem Synthesis. Ces mélanges comportent des monomères de formule (I) et/ou des oligomères de monomères de formule (I). Ils comportent éventuellement de la mélamine.

Les composés b) comportent au moins un groupement 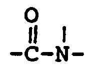 et ils sont dépourvus de groupement méthylol et de groupement éther correspondant au méthylol, de telle sorte qu'ils ne sont pas des aminoplastes. Ces composés b) sont notamment l'urée, les urées substituées, les amides et les imides. Ces composés b) ont au moins une des formules suivantes : 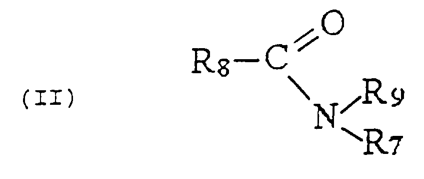 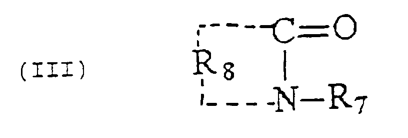 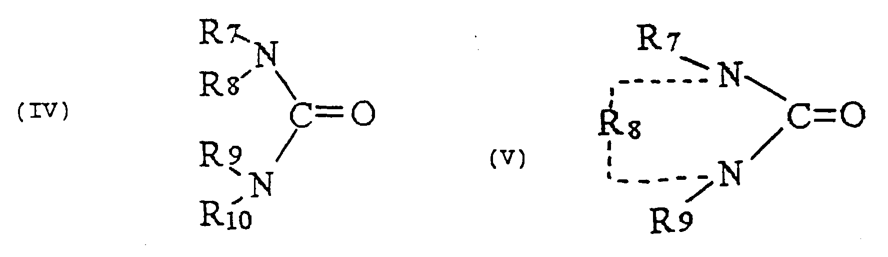 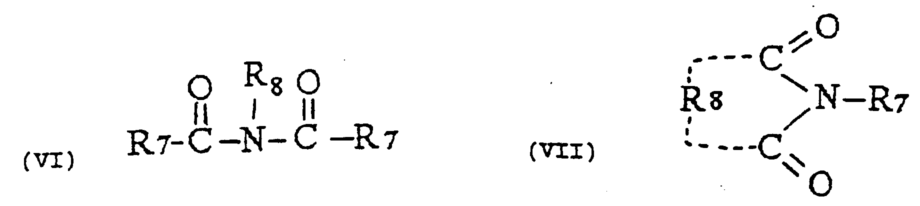 dans lesquelles R₇, R₈, R₉, R₁₀ sont choisis chacun dans le groupe constitué par -H et les radicaux hydrocarbonés saturés ou insaturés aliphatiques, cycliques ou aromatiques.

R₇, R₈, R₉, R₁₀ peuvent être identiques ou différents, avec la condition que R₈ soit différent de -H dans les formules (III), (V) et (VII).

De tels composés sont par exemple le formamide, l'acétamide, le proprionamide, le butyramide, le caproamide, le lauramide, le stéaramide, le succinamide, l'urée, la diméthylurée, le benzamide, le benzanilide, le N-cyclohexyl-propionamide, le N,N-hydroxyéthyloléamide, l'ε-caprolactame, le butyranilide, le succinimide.

On peut utiliser un seul de ces composés, ou un mélange d'au moins deux de ces composés.

Les composés b) à groupement 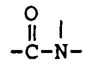 peuvent être incorporés tels quels dans les résines ou dans les compositions contenant ces résines, ou on peut les former in situ dans ces résines ou ces compositions à partir de réactifs chimiques de base, par exemple par l'action des acides, anhydrides, ou chlorures d'acides sur les amines ou les dérivés aminés correspondants.

On peut également utiliser si on le désire des mélanges comportant à la fois au moins un composé b) et au moins un réactif susceptible de donner un composé b).

L'invention peut être appliquée pour rigidifier des compositions de caoutchoucs.

De tels caoutchoucs sont par exemple le caoutchouc naturel, les caoutchoucs synthétiques, ou des mélanges d'au moins deux de ces caoutchoucs. Des exemples de caoutchoucs synthétiques sont le polyisoprène, le polybutadiène, le polychloroprène, le polyisobutylène, les copolymères styrène-butadiène, les copolymères acrylonitrile-butadiène-styrène et les copolymères éthylène-propylène. Ces caoutchoucs peuvent être réticulés par exemple sous l'action du soufre, des peroxydes ou des bismaléïmides avec ou sans soufre, ou ils peuvent être dépourvus de système de réticulation, comme, par exemple, des caoutchoucs thermoplastiques.

Ces compositions peuvent comporter les charges et additifs habituels comme par exemple du noir de carbone, de l'acide stéarique, de la silice, de l'acide silicique, de l'oxyde de zinc, des sels de cobalt, du soufre ou des agents de réticulation, des accélérateurs de vulcanisation, des agents contre le vieillissement, notamment des anti-oxydants, des huiles ou divers agents de mise en oeuvre.

Le fait que le composé b) ne soit pas un aminoplaste facilite son incorporation et sa dispersion homogène dans ces compositions de caoutchouc.

L'invention sera aisément comprise à l'aide des exemples non limitatifs qui suivent et des figures toutes schématiques relatives à ces exemples.

Sur le dessin :
- la figure 1 représente des spectres de DSC (Differential Scanning Calorimetry : calorimétrie différentielle par balayage), pour une composition conforme à l'invention et pour une composition non conforme à l'invention ;
- les figures 2 à 9 représentent des courbes rhéométriques pour des compositions de caoutchouc conformes, ou non, à l'invention.

### I - Définitions et tests

Les définitions et les tests utilisés dans les exemples sont donnés ci-dessous.
1 - Rhéométrie
   On réalise des mesures rhéométriques dans les deux cas suivants :
   a) Composition comportant des résines novolaques et des caoutchoucs sans système de réticulation pour ceux-ci.
      On utilise un rhéométre classique à rotor biconique oscillant tel que décrit dans la norme AFNOR-NF-T43-015 (août 1975). L'évolution du couple rhéométrique en fonction du temps décrit l'évolution du durcissement de la résine dans la matrice élastomérique et donc notamment la vitesse de ce durcissement, et le couple rhéométrique maximal permet de décrire l'intensité maximale du réseau de la résine, c'est-à-dire le rendement maximal de condensation de la résine. Les diagrammes sont établis à 150°C et permettent donc d'évaluer les caractéristiques cinétiques et le rendement du durcissement des résines à cette température.
   b) Composition comportant des résines novolaques et des caoutchoucs avec des sytèmes réticulants pour ceux-ci. Les mesures sont effectuées conformément à la norme AFNOR précitée. Les mesures sont effectuées également à 150°C. L'évolution du couple rhéométrique en fonction du temps décrit l'évolution de la rigidification de la composition par suite à la fois du durcissement de la ou des résines et de la réticulation du ou des caoutchoucs, et donc notamment la vitesse de cette rigidification, et le couple rhéométrique maximal permet de décrire la rigidité maximale de la composition à cette température.
2 - Essais de traction
   Ces essais permettent de déterminer les contraintes d'élasticité et les propriétés limites. Ils sont effectués conformément à la norme AFNOR-NF-T46-002 de septembre 1988.
   Ces essais sont réalisés pour des compositions de caoutchouc comportant éventuellement des résines novolaques, et ceci après cuisson de 50 minutes à 150°C, sauf indication différente.
   On mesure les contraintes nécessaires pour obtenir 10 % d'allongement (M10), 100 % d'allongement (M100) et 300 % d'allongement (M300).
   On mesure également les contraintes à la rupture et les allongements à la rupture. Toutes ces mesures de traction sont effectuées dans les conditions normales de température et d'hygrométrie selon la norme AFNOR-NF-T40-101 de décembre 1979.
3 - Calorimétrie
   La DSC (Differential Scanning Calorimetry : calorimétrie différentielle par balayage) est une technique de caractérisation par calorimétrie permettant de mesurer la quantité de chaleur ΔH (enthalpie) consommée ou libérée au cours d'une réaction chimique. Une valeur plus grande de ΔH, pour une même réaction exothermique, traduit une augmentation de la réactivité des ingrédients en présence et une réaction chimique plus complète. Cette méthode est un examen en gradient de température.
   On utilise un calorimètre DSC pour mesurer la différence de flux thermique nécessaire pour maintenir l'échantillon étudié à la même température qu'une référence inerte. Cette température est en augmentation linéaire de 10°C par minute, de 40°C à 250°C. Le calorimètre est un appareil de la Société Setaram de dénomination DSC 111.
   Lorsqu'une réaction chimique se produit, la courbe du flux thermique en fonction de la température permet de mettre en évidence un pic d'endothermicité ou d'exothermicité. L'intégration de ce pic permet de calculer l'enthalpie ΔH de la réaction.

### II - Les exemples

Dans tous les exemples 1 à 9 qui suivent on utilise un même durcisseur qui fait partie du groupe constitué par les mélamines substituées. Il s'agit du produit qui est vendu par la Société American Cyanamid sous la dénomination CYREZ ® 963. Ce produit est un mélange complexe de divers composés de formule (I) précités, ou d'oligomères de ces composés, dont environ 36 % en poids d'hexa(méthoxyméthyl)mélamine (H3M).

D'autre part, dans tous les exemples 1 à 9 qui suivent on utilise une même résine novolaque qui est un précondensat de résorcinol et de formol. Cette résine est vendue par la Société Schenectady sous la dénomination SRF 1500.

### Exemple 1

Cet exemple a pour but d'étudier la condensation de la résine novolaque avec le durcisseur dans deux compositions dont une est conforme à l'invention.

Ces compositions sont données dans le tableau 1. Les taux de produits utilisés sont exprimés en poids pour 100 parties en poids de résine novolaque.

**TABLEAU 1**

| N° de composition | 1 | 2 |
|---|---|---|
| Résine Novolaque | 100 | 100 |
| Durcisseur | 75 | 75 |
| Propionamide | 0 | 25 |

La composition 1 est donc une composition témoin, et la composition 2 est conforme à l'invention.

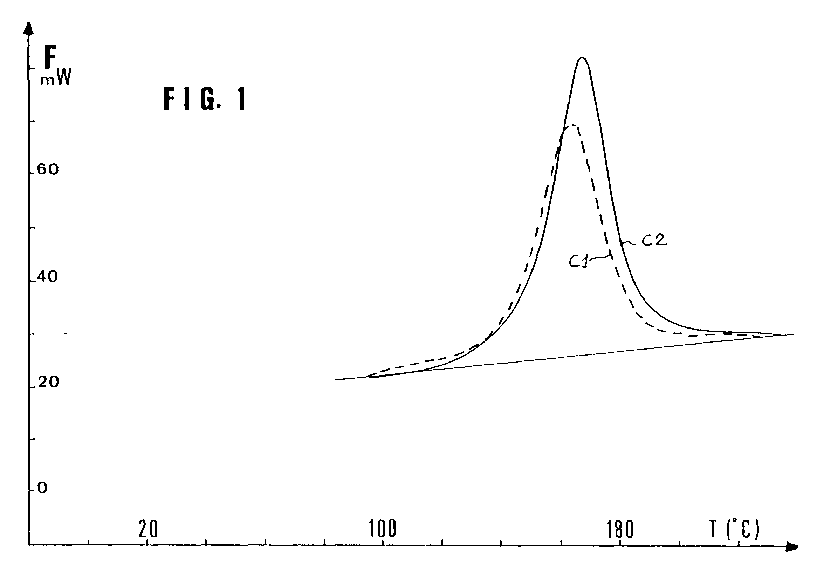

On effectue un examen par DSC des deux compositions conformément au §I-3 du chapitre I précédent. Les courbes obtenues sont données à la figure 1.

Sur cette figure les abscisses correspondent à la température T ( °C), les ordonnées correspondent au flux thermique F (mW), la courbe C1 en pointillés correspond à la composition 1 et la courbe C2 en trait plein correspond à la composition 2.

On constate que les deux réactions sont exothermiques, ce qui se traduit par deux pics d'exothermicité, dont l'intégration entre 80 et 240°C donne les deux enthalpies de ces réactions. Ces enthalpies sont calculées et exprimées en joules par gramme de composition.

On constate que la composition 2 conforme à l'invention a une réaction de durcissement légèrement plus tardive que la composition témoin 1 (décalage de quelques degrés) mais que cette condensation se traduit par une exothermicité plus importante (enthalpie ΔH de réaction : 184 J/g pour la composition 2 contre 155 J/g pour la composition 1), la condensation est donc plus complète dans le cas de l'invention.

### Exemple 2

Cet exemple a pour but de montrer l'incidence de l'invention sur des compositions de caoutchouc, sans sytème permettant la réticulation de celui-ci.

On utilise une composition de base dont la formulation est la suivante en pce, c'est-à-dire en parties en poids pour 100 parties en poids d'élastomère :

| | |
|---|---|
| caoutchouc naturel | 100 |
| noir de carbone N326* | 60 |
| Résine novolaque | 4 |
| Durcisseur | 3 |

| | |
|---|---|
| *Dénomination conforme à la norme ASTM D-1765. | |

Cette composition de base est référencée 3. A cette composition 3 on ajoute divers composés, dans des proportions variables en pce, conformément au tableau 2.

**TABLEAU 2**

| N° de composition | 3 | 4 | 5 | 6 | 7 | 8 |
|---|---|---|---|---|---|---|
| Propionamide | | 1 | | | | |
| Stéaramide | | | 3,9 | | | |
| Benzamide | | | | 1,7 | | |
| ε-caprolactame | | | | | 1,6 | |
| Urée | | | | | | 0,8 |

Les compositions 4 à 8 sont conformes à l'invention, et la composition 3 est la composition témoin.

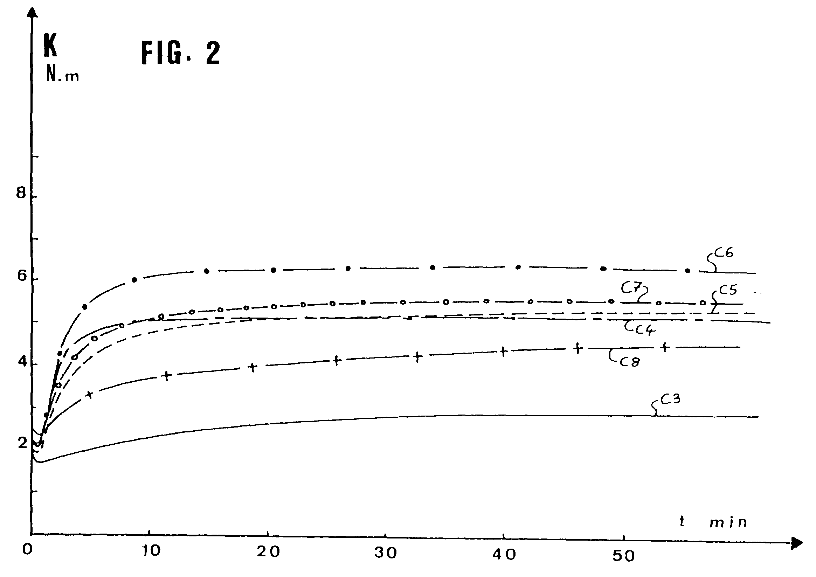

On caractérise ces diverses compositions par rhéométrie, conformément au § I-1 a) du chapitre I précédent. Les courbes sont données à la figure 2. Sur cette figure les abscisses correspondent au temps de cuisson "t" (minutes) et les ordonnées correspondent au couple "K" mesuré au rhéomètre (N.m). Les courbes C3 à C8 correspondent respectivement aux compositions 3 à 8.

Le couple maximum, avec le temps correspondant pour y parvenir, obtenu pour chaque composition est donné dans le tableau 3.

**TABLEAU 3**

| N° de composition | 3 | 4 | 5 | 6 | 7 | 8 |
|---|---|---|---|---|---|---|
| Couple maximum (newton.mètre) | 2,94 | 4,86 | 5,08 | 6,10 | 5,31 | 4,52 |
| Temps (min) | > 60 | 10 | 30 | 15 | 20 | 60 |

Cet exemple montre que les compositions 4 à 8 conformes à l'invention présentent un rendement de condensation de la résine notablement plus élevé que pour la composition témoin 3. Ceci se traduit par un couple maximum plus élevé. D'autre part, la vitesse de condensation est plus élevée pour les compositions conformes à l'invention, puisque le temps au bout duquel le couple maximum est obtenu, est diminué.

### Exemple 3

Dans cet exemple on étudie l'application de l'invention à des compositions de caoutchoucs vulcanisant au soufre.

On réalise une composition de base ayant la formulation suivante en pce :

| | |
|---|---|
| caoutchouc naturel | 100 |
| noir de carbone N326 | 60 |
| oxyde de zinc | 7 |
| acide stéarique | 1 |
| résine novolaque | 4 |
| anti-oxydant | 1 |
| soufre | 4 |
| accélérateur de vulcanisation | 0,8 |
| durcisseur | 3 |

Dans cette formulation :
- l'anti-oxydant est la N-1,3 diméthylbutyl-N'-phényl-para-phénylènediamine ;
- l'accélérateur de vulcanisation est le N-oxydiéthylène-2-benzothiazylsulfénamide.

A cette composition, on ajoute divers composés, la nature et la quantité en pce de ces composés dans les compositions ainsi obtenues étant données dans le tableau 4.

La composition 9 est constituée par le mélange de base.

**TABLEAU 4**

| N° de composition | 9 | 10 | 11 | 12 | 13 | 14 |
|---|---|---|---|---|---|---|
| Propionamide | | 1 | | | | |
| Stéaramide | | | 3,9 | | | |
| Benzamide | | | | 1,7 | | |
| ε-caprolactame | | | | | 1,6 | |
| Urée | | | | | | 0,8 |

Les compositions 10 à 14 sont conformes à l'invention, la composition 9 étant la composition témoin.

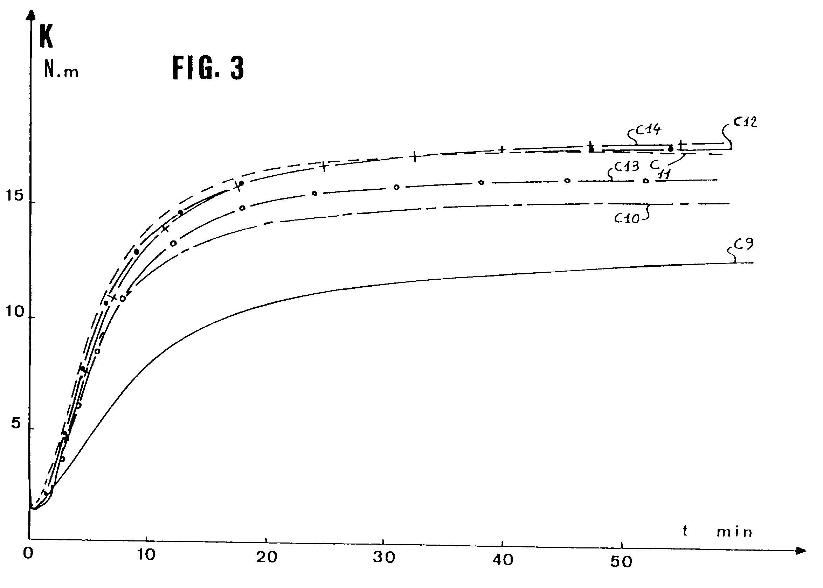

On caractérise ces compositions par rhéométrie conformément au § I-lb) du chapitre I précédent. Les rhéogrammes obtenus sont donnés à la figure 3. Sur cette figure les abscisses et les ordonnées ont la même signification que pour la figure 2, les courbes C9 à C14 correspondant respectivement aux compositions 9 à 14.

Le tableau 5 donne, pour chacune de ces compositions les valeurs suivantes : ts(0,2), t₉₉, CRI, M10, M100, M300, qui sont déterminées conformément au § I-1 b) et au § I-2 du chapitre I.

ts(0,2), exprimé en minutes, est un descripteur du temps de démarrage de la rigidification ; t₉₉, exprimé en minutes, est un descripteur de la fin de la rigidification, CRI exprimé en minutes⁻¹ est un indice de vitesse de la rigidification.

**TABLEAU 5**

| N° de composition | 9 | 10 | 11 | 12 | 13 | 14 |
|---|---|---|---|---|---|---|
| ts (0,2) (min) | 1,2 | 1,2 | 2 | 2 | 1 | 1,2 |
| t₉₉ (min) | 56 | 30 | 27 | 29 | 30 | 33 |
| CRI (min⁻¹) | 1,82 | 3,47 | 4,00 | 3,70 | 3,45 | 3,14 |
| M10 (MPa) | 0,93 | 1,26 | 1,65 | 1,40 | 1,42 | 1,55 |
| M100 (MPa) | 3,20 | 3,76 | 4,18 | 3,87 | 4,22 | 4,82 |
| M300 (MPa) | 9,87 | 10,98 | 11,85 | 10,83 | 12,0 | 13,59 |

Comme dans les exemples précédents, on constate que l'invention permet une rigidification des compositions plus importante que dans le cas de la composition témoin. On constate également une accélération nette de la cinétique de rigidification, dans le cas de l'invention. D'autre part, les caractéristiques mécaniques sont notablement améliorées grâce à l'invention en ce qui concerne les contraintes M10, M100, M300, l'amélioration variant de 30 à 80 % pour M10 et de 20 à 50 % pour M100.

### Exemple 4

Cet exemple montre l'intérêt de l'invention lorsqu'on fait varier le taux de résine novolaque dans une composition de caoutchouc vulcanisant au soufre, susceptible d'adhérer à un renfort métallique.

On utilise une composition de base ayant la formulation suivante en pce :

| | |
|---|---|
| caoutchouc naturel | 100 |
| noir de carbone N326 | 60 |
| oxyde de zinc | 7 |
| acide stéarique | 1 |
| anti-oxydant | 1 |
| soufre | 4 |
| accélérateur de vulcanisation | 0,8 |
| sel de cobalt | 1 |

Dans cette composition :
- l'anti-oxydant et l'accélérateur de vulcanisation sont les mêmes que dans l'exemple 3 ;
- le sel de cobalt est le naphténate de cobalt.

A cette composition de base on ajoute la résine novolaque, le durcisseur et éventuellement du propionamide. On obtient ainsi les compositions représentées au tableau 6 (proportions en pce).

**TABLEAU 6**

| N° de composition | 15 | 16 | 17 | 18 |
|---|---|---|---|---|
| Résine novolaque | 4 | 4 | 3 | 3 |
| Durcisseur | 3 | 3 | 2,25 | 2,25 |
| Propionamide | | 2 | 1,5 | 1 |

Les compositions 16 à 18 sont conformes à l'invention et la composition 15 est une composition témoin.

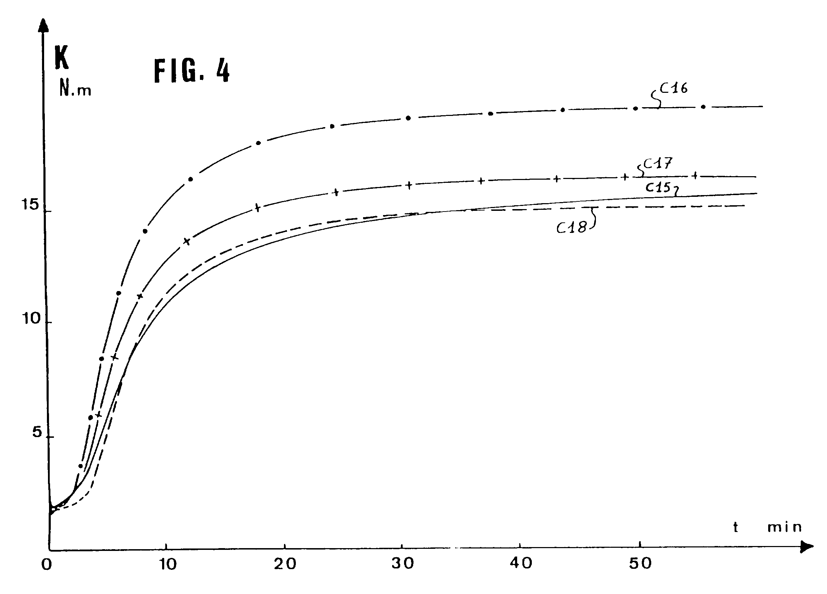

Les rhéogrammes des compositions 15 à 18 sont représentés à la figure 4. Sur cette figure les abscisses et les ordonnées ont la même signification qu'à la figure 2, les courbes C15 à C18 correspondant respectivement aux compositions 15 à 18.

Le tableau 7 donne les caractéristiques rhéométriques obtenues et le tableau 8 donne les propriétés mécaniques, après essais de traction, des compositions après cuisson.

**TABLEAU 7**

| N° de composition | 15 | 16 | 17 | 18 |
|---|---|---|---|---|
| tₛ (0,2) (min) | 1,5 | 2 | 2 | 3 |
| t₉₉ (min) | 48 | 26 | 25 | 25 |
| CRI (min⁻¹) | 2,15 | 4,17 | 4,35 | 4,54 |

**TABLEAU 8**

| N° de composition | 15 | 16 | 17 | 18 |
|---|---|---|---|---|
| M10 (MPa) | 1,23 | 1,84 | 1,38 | 1,29 |
| M100 (MPa) | 3,80 | 5,03 | 4,45 | 4,17 |
| M300 (MPa) | 10,20 | 12,66 | 12,00 | 11,55 |
| Allongement à la rupture (%) | 350 | 330 | 380 | 370 |
| Contrainte à la rupture (MPa) | 17,4 | 18,7 | 20,5 | 19,0 |

La figure 4 et les tableaux 7 et 8 permettent de faire les constatations suivantes :
- Les courbes C15 et C18 sont voisines, c'est-à-dire que les rendements de rigidification sont analogues bien que la teneur en résine novolaque dans la composition 18 conforme à l'invention soit nettement inférieure à celle de la composition témoin 15. La composition 18 donne un temps t₉₉ nettement plus faible que pour la composition 15 et un indice de vitesse de rigidification CRI nettement plus élevé que pour cette composition 15.
- Les courbes C16 et C17 traduisent une augmentation de la vitesse et du rendement de rigidification, bien que les compositions 16 et 17 contiennent la même quantité de résine novolaque que la composition témoin 15, ou une quantité inférieure.
- Par rapport à la composition témoin 15, on constate pour les compositions conformes à l'invention, une augmentation des modules M10, M100, M300, une augmentation de la contrainte à la rupture. L'allongement à la rupture a des valeurs voisines pour toutes ces compositions.

L'invention permet donc de diminuer le taux de résine novolaque dans les compositions, tout en conservant des propriétés mécaniques au moins aussi bonnes que dans les compositions non conformes à l'invention.

### Exemple 5

Cet exemple permet de comparer une composition conforme à l'invention à des compositions non conformes à l'invention comportant éventuellement des accélérateurs de vulcanisation dépourvus du groupement 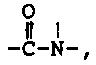 toutes ces compositions étant dépourvues d'agent permettant la réticulation du caoutchouc.

On utilise la composition de base suivante (proportions en pce) :

| | |
|---|---|
| caoutchouc naturel | 100 |
| noir de carbone N326 | 60 |
| résine novolaque | 4 |
| durcisseur | 3 |

A cette composition de base on ajoute des accélérateurs de vulcanisation conformément au tableau 9 (proportions en pce).

**TABLEAU 9**

| N° de composition | 19 | 20 | 21 | 22 |
|---|---|---|---|---|
| DPG (*) | | 1 | | |
| DOTG (**) | | | 1 | |
| Propionamide | | | | 1 |

| | | | | |
|---|---|---|---|---|
| * diphénylguanidine | | | | |
| ** di-o-tolylguanidine | | | | |

On obtient ainsi les quatre compositions 19 à 22 dont seule la composition 22 est conforme à l'invention, la composition 19 étant constituée par la composition de base.

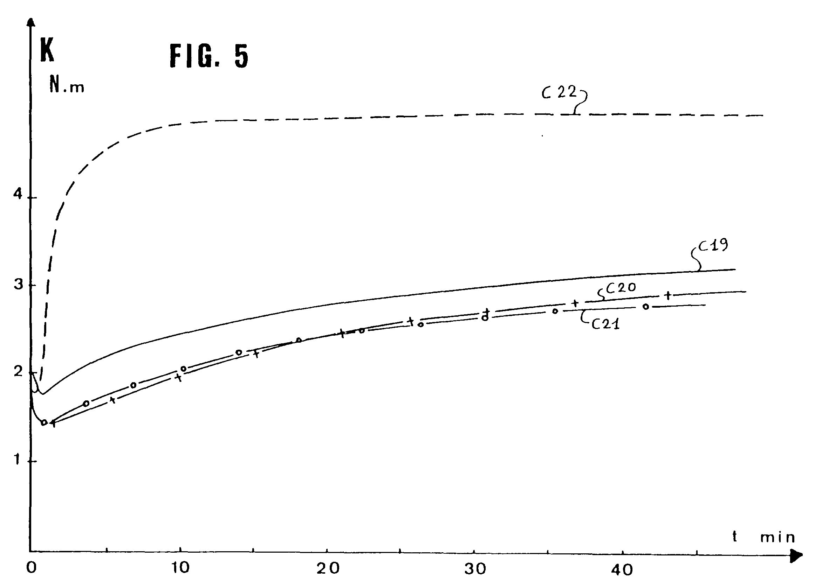

Les rhéogrammes correspondant à ces compositions sont donnés à la figure 5, où les abscisses et les ordonnées ont la même signification qu'à la figure 2, les courbes C19 à C22 correspondant respectivement aux compositions 19 à 22.

Les couples rhéométriques mesurés après 60 minutes à 150°C (en newton.mètre) sont donnés dans le tableau 10.

**TABLEAU 10**

| N° de composition | 19 | 20 | 21 | 22 |
|---|---|---|---|---|
| Couple rhéométrique à 60 minutes (newton.mètre) | 2,94 | 2,41 | 2,25 | 4,86 |

On constate sur la figure 5 que la composition 22 conforme à l'invention présente une vitesse de condensation de la résine beaucoup plus élevée que les autres compositions et le tableau 10 montre que le couple rhéométrique, donc le rendement de condensation de la résine, est également plus élevé pour cette composition que pour les autres. On constate également que les compositions 20 et 21, non conformes à l'invention mais comportant des accélérateurs de vulcanisation, ont des vitesses de condensation de la résine plus faibles que pour la composition témoin 19, et que le couple rhéométrique de ces compositions 20 et 21 est également plus faible que pour la composition témoin 19.

Les guanidines sont connues dans l'art pour activer la vulcanisation par le soufre des élastomères diéniques, au même titre que, par exemple, les amides, comme décrit notamment dans l'article "Relationship between constitution and action of accelerators" de Th. Kempermann, International Polymer Science and Technology, Vol. 5, n° 5, 1978 pp. T/34-T/42.

Il est donc surprenant de constater grâce à l'exemple 5 que les guanidines des compositions 20, 21 n'ont pas les effets positifs du propionamide de la composition 22 sur la vitesse et le rendement de la condensation de la résine novolaque.

### Exemple 6

Cet exemple permet de montrer l'application de l'invention à des compositions utilisant un agent de réticulation du caoutchouc autre que le soufre. On réalise les compositions conformément au tableau 11 (proportions en pce).

**TABLEAU 11**

| N° de composition | 23 | 24 | 25 | 26 |
|---|---|---|---|---|
| Caoutchouc naturel | 100 | 100 | 100 | 100 |
| Noir de carbone N326 | 60 | 60 | 60 | 60 |
| Résine novolaque | | | 4 | 4 |
| Péroxyde de dicumyle | 1,4 | 1,4 | 1,4 | 1,4 |
| Propionamide | | 2 | | 2 |
| Durcisseur | | | 3 | 3 |

Le péroxyde de dicumyle est l'agent de réticulation pour le caoutchouc. Seule la composition 26 est conforme à l'invention, les compositions 24, 25 contiennent au moins un des composants de l'invention, mais pas la totalité, la composition 23 est la composition témoin.

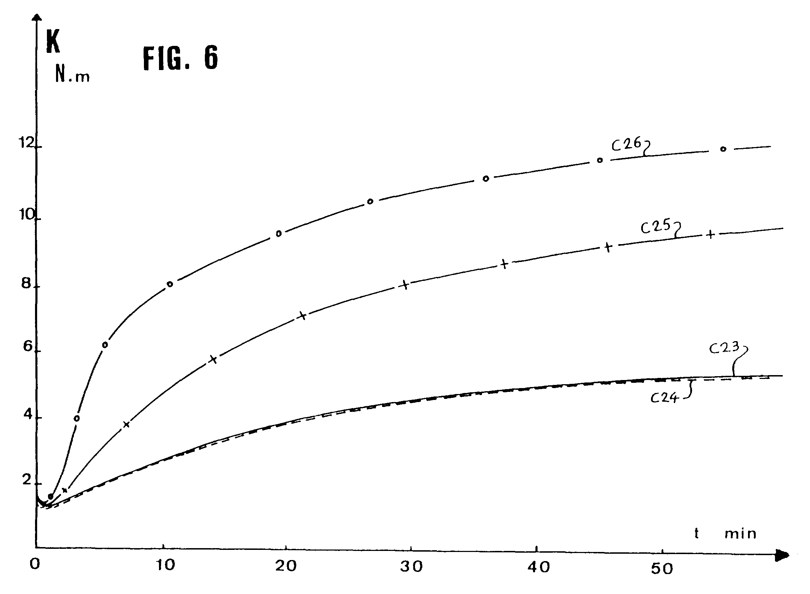

Les rhéogrammes correspondant à ces compositions sont donnés à la figure 6, où les abscisses et les ordonnées ont la même signification qu'à la figure 2, les courbes C23 à C26 correspondant respectivement aux compositions 23 à 26.

Les couples rhéométriques (newton.mètre) déterminés après 60 minutes à 150°C sont donnés dans le tableau 12.

**TABLEAU 12**

| N° de composition | 23 | 24 | 25 | 26 |
|---|---|---|---|---|
| Couple rhéométrique à 60 minutes (newton.mètre) | 5,42 | 5,42 | 9,94 | 12,31 |

Les courbes de la figure 6 et le tableau 12 montrent que l'invention (composition 26) permet d'obtenir une bien meilleure rigidification que dans le cas des compositions non conformes à l'invention.

### Exemple 7

Le but de cet exemple est de montrer que l'invention permet une rigidification par migration d'au moins un des produits de l'invention [résines novolaques, durcisseurs, composés b)] entre deux compositions de caoutchouc en contact.

On prépare les compositions suivantes (proportions en pce) :

| | |
|---|---|
| Caoutchouc naturel | 100 |
| Noir de carbone N326 | 60 |
| Oxyde de zinc | 7 |
| Acide stéarique | 0,5 |
| Anti-oxydant | 1 |
| Soufre | 4 |
| Accélérateur de vulcanisation | 0,8 |
| Sel de cobalt | 1 |
| Résine novolaque | Voir tableau 13 |
| Durcisseur | Voir tableau 13 |
| Propionamide | Voir tableau 13 |

**TABLEAU 13**

| N° de composition | 27 | 28 | 29 | 30 |
|---|---|---|---|---|
| Résine novolaque | 0 | 4 | 0 | 0 |
| Durcisseur | 0 | 0 | 3 | 3 |
| Propionamide | 0 | 0 | 0 | 1 |

L'antioxydant, l'accélérateur de vulcanisation et le sel de cobalt sont les mêmes que dans l'exemple 4.

Aucune de ces compositions initiales n'est conforme à l'invention, la composition 27 étant la composition témoin.

On réalise ensuite 5 échantillons, obtenus chacun de la façon suivante :

On superpose deux plaques ayant chacune une épaisseur de 2,5 mm, une largeur de 100 mm et une longueur de 250 mm. On obtient ainsi un pavé de 5 mm d'épaisseur qu'on laisse reposer dans les conditions normales (23 ± 2°C, 50 ± 5 % d'humidité relative, pression atmosphérique), pendant 24 heures avant de le cuire pendant 60 minutes à 150°C.

Les échantillons ainsi réalisés sont constitués par les compositions suivantes :
- échantillon n° 1 : compositions 27 et 28,
- échantillon n° 2 : compositions 27 et 29,
- échantillon n° 3 : compositions 27 et 30,
- échantillon n° 4 : compositions 28 et 29,
- échantillon n° 5 : compositions 28 et 30.

On détermine après cuisson la contrainte M10 (conformément au paragraphe 2 du chapitre I) des compositions suivantes, le prélèvement dans chaque échantillon étant effectué à 1 mm de l'interface entre les deux compositions :
- échantillon n° 1 : composition 28,
- échantillon n° 2 : composition 29,
- échantillon n° 3 : composition 30,
- échantillon n° 4 : composition 29,
- échantillon n° 5 : composition 30.

Les résultats sont donnés dans le tableau 14.

**TABLEAU 14**

| N° échantillon | 1 | 2 | 3 | 4 | 5 |
|---|---|---|---|---|---|
| Constitution des échantillons | | | | | |
| N° de composition | 27 | 27 | 27 | 28 | 28 |
| N° de composition | 28 | 29 | 30 | 29 | 30 |
| N° de composition testée | 28 | 29 | 30 | 29 | 30 |
| M10 (MPa) | 0,95 | 1,03 | 1,18 | 1,25 | 1,45 |

Les variations des valeurs de M10 montrent que dans le cas des échantillons n° 4 et 5, il s'est produit une migration de résine novolaque de la composition 28 vers la composition 29 (cas de l'échantillon 4) et de la composition 28 vers la composition 30 (cas de l'échantillon 5). La composition 29 de l'échantillon n° 4 n'est pas conforme à l'invention, après migration de la résine, car elle ne contient pas de propionamide. Par contre, la composition 30 de l'échantillon 5, après migration de la résine en provenance de la composition 28, devient conforme à l'invention, puisqu'elle contient alors les trois composants de l'invention, et elle présente une contrainte M10 supérieure à celle de l'échantillon 4.

Il est ainsi possible de mettre en oeuvre l'invention en provoquant la migration d'au moins un des trois composants de l'invention, par exemple une résine novolaque dans une composition qui initialement n'en contenait pas ou en contenait peu, mais qui contenait les deux autres composants de l'invention [durcisseur et composé b)], ce qui permet ainsi d'ajuster la rigidité, après cuisson, d'une composition, en fonction de la teneur en résine novolaque d'une ou plusieurs autres compositions au contact de ladite composition à rigidifier. Cette technique peut être utilisée par exemple pour moduler la rigidité des mélanges de caoutchouc à divers endroits d'une enveloppe de pneumatique, lors de sa fabrication.

Le résultat serait le même si la migration s'effectuait sur le durcisseur, et/ou sur le composé b), et/ou sur le ou les réactifs susceptibles de donner le composé b).

### Exemple 8

Le but de cet exemple est de montrer l'avantage présenté par l'invention lors du vieillissement thermo-oxydant d'une composition de caoutchouc.

On réalise les compositions ayant les formulations suivantes (valeurs en pce) :

| | |
|---|---|
| Caoutchouc naturel | 100 |
| Noir de carbone N326 | 60 |
| Oxyde de zinc | 7 |
| Acide stéarique | 0,5 |
| Résine novolaque | Variable (voir tableau 15) |
| Anti-oxydant (*) | 1 |
| Soufre | Variable (voir tableau 15) |
| Accélérateur de vulcanisation (**) | 0,8 |
| Durcisseur | Variable (voir tableau 15) |
| Naphténate de cobalt | 1 |
| ε-caprolactame | Variable (voir tableau 15) |

| | |
|---|---|
| (*) N-1,3 diméthylbutyl-N'-phényl-para-phénylènediamine | |
| (**) N-oxydiéthylène-2-benzothiazylsulfénamide | |

Le tableau 15 donne les diverses valeurs (en pce) de la résine novolaque, du soufre, du durcisseur, et de l'ε-caprolactame.

**TABLEAU 15**

| N° de composition | 31 | 32 | 33 |
|---|---|---|---|
| Résine novolaque | 4 | 4 | 3 |
| Durcisseur | 3 | 3 | 2,25 |
| ε-caprolactame | 0 | 3,1 | 2,3 |
| Soufre | 4 | 2,5 | 3 |

Les compositions 32, 33 sont conformes à l'invention, la composition 31 sert de témoin.

On détermine après cuisson les caractéristiques suivantes : M10, M100, contrainte à la rupture et allongement à la rupture, conformément au paragraphe 2 du chapitre I mais avec les différences suivantes :
- Etat initial après cuisson :
Les échantillons sont cuits à 150°C, pendant des temps variables. Les déterminations sont faites sur les échantillons cuits.
Les temps de cuisson et les valeurs obtenues (propriétés initiales) pour ces déterminations sont donnés dans le tableau 16.

**TABLEAU 16**

| PROPRIETES INITIALES | | | |
|---|---|---|---|
| N° de composition | 31 | 32 | 33 |
| Temps de cuisson (min) | 75 | 40 | 40 |
| M10 (MPa) | 1,26 | 1,51 | 1,33 |
| M100 (MPa) | 3,85 | 3,84 | 3,95 |
| Allongement à la rupture (%) | 300 | 360 | 390 |
| Contrainte à la rupture (MPa) | 16,9 | 20,8 | 21,9 |

- Etat après vieillissement thermo-oxydant :
Les échantillons sont cuits de façon identique à ceux utilisés précédemment (cuisson à 150°C avec temps de cuisson indiqué au tableau 16) mais les déterminations sont effectuées après un vieillissement sous air à 75°C pendant 14 jours de ces échantillons cuits.
Les valeurs obtenues ainsi que les variations (en %) par rapport aux valeurs initiales du tableau 16 pour M10 et M100, sont données dans le tableau 17.

**TABLEAU 17**

| PROPRIETES APRES VIEILLISSEMENT SOUS AIR A 75°C PENDANT 14 JOURS | | | |
|---|---|---|---|
| N° de composition | 31 | 32 | 33 |
| M10 (MPa) | 1,7 | 1,78 | 1,75 |
| % évolution | 35 | 18 | 31 |
| M100 (MPa) | 6,7 | 5,6 | 6,3 |
| % évolution | 74 | 46 | 59 |
| Allongement à la rupture (%) | 120 | 170 | 160 |
| Contrainte à la rupture (MPa) | 9,6 | 12,7 | 13,3 |

L'étude des tableaux 16 et 17 permet de faire les observations suivantes :
- Etat initial
   L'invention permet de diminuer le taux de soufre tout en permettant d'atteindre des valeurs de M10 ou M100 proches ou très proches de celles de la composition témoin, c'est-à-dire que les rigiditées obtenues sont comparables.
   On constate d'autre part que les allongements à la rupture et les contraintes à la rupture sont toujours supérieurs, dans le cas de l'invention.
- Etat après vieillissement
   L'invention permet de diminuer très notablement les variations (en %) de M10 et M100, par rapport à la composition témoin, c'est-à-dire que les compositions conformes à l'invention sont beaucoup plus stables en rigidité que la composition témoin au cours de ce vieillissement thermo-oxydant. D'autre part, les valeurs des allongements à la rupture et des contraintes à la rupture sont encore notablement supérieures, dans le cas de l'invention, à celles de la composition témoin.

### Exemple 9

Le but de cet exemple est de montrer que d'autres caoutchoucs que le caoutchouc naturel peuvent être utilisés dans l'invention.

On utilise la même composition de base que celle de l'exemple 2, avec la différence qu'au lieu de 100 parties en poids de caoutchouc naturel on emploie 100 parties en poids de caoutchouc SBR (copolymère butadiène-styrène comportant 25 % de styrène).

A partir de cette composition de base référencée composition 34, on obtient la composition 35 conforme à l'invention comportant 2 pce de stéaramide.

On caractérise ces deux compositions par rhéométrie, conformément au § I-1 a) du chapitre I précédent.

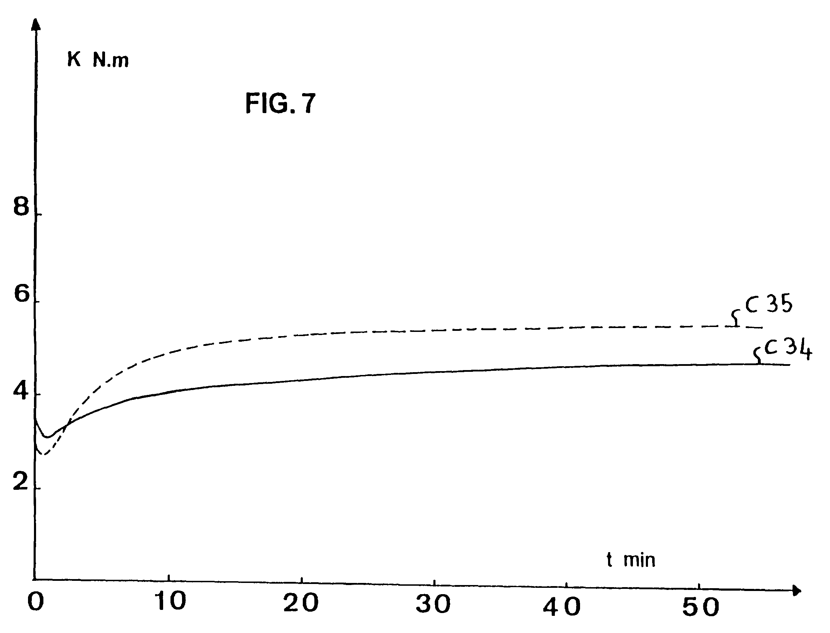

Les courbes résultantes C34 pour la composition 34 et C35 pour la composition 35, sont données à la figure 7, les abscisses et les ordonnées ayant la même signification que pour la figure 2. Ces courbes montrent que la composition 35 présente un rendement et une vitesse de condensation de la résine nettement plus élevés que la composition témoin 34.

### Exemple 10

Le but de cet exemple est de montrer que d'autres résines novolaques que la résine SRF 1500 et d'autres durcisseurs que le CYREZ ® 963 peuvent être utilisés dans l'invention.

On utilise les compositions données dans le tableau 18 suivant (valeurs en pce).

**TABLEAU 18**

| N° de composition | 36 | 37 | 38 | 39 |
|---|---|---|---|---|
| Caoutchouc naturel | 100 | 100 | 100 | 100 |
| Noir de carbone N326 | 60 | 60 | 60 | 60 |
| Résine novolaque SRF 1500 | 4 | 4 | | |
| Résine novolaque Penacolite ® B20 | | | 4 | 4 |
| Durcisseur CYREZ @ 963 | | | 4 | 4 |
| Durcisseur COHEDUR ® A | 3 | 3 | | |
| Propionamide | 0 | 1 | 0 | 1 |

La résine SRF 1500 et le durcisseur CYREZ ® 963 sont identiques à ceux utilisés dans les exemples précédents. La résine novolaque Penacolite ® B20 qui est vendue par la Société Koppers est un précondensat de résorcinol modifié/formol.

Le durcisseur COHEDUR ® A qui est un produit de la Société Bayer est un mélange complexe de divers composés de formule (I) précités, ou d'oligomères de ces composés, dont environ 20 % en poids d'hexa(méthoxyméthyl)mélamine (H3M). Les compositions 37 et 39 sont conformes à l'invention, les compositions 36 et 38 étant des compositions témoins. On caractérise ces compositions par rhéométrie conformément au § I-1 a) du chapitre I précédent.

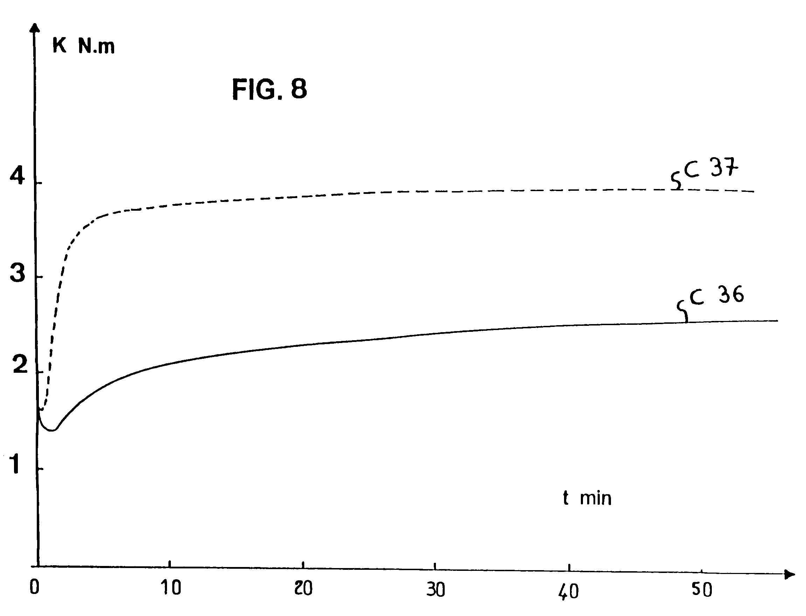

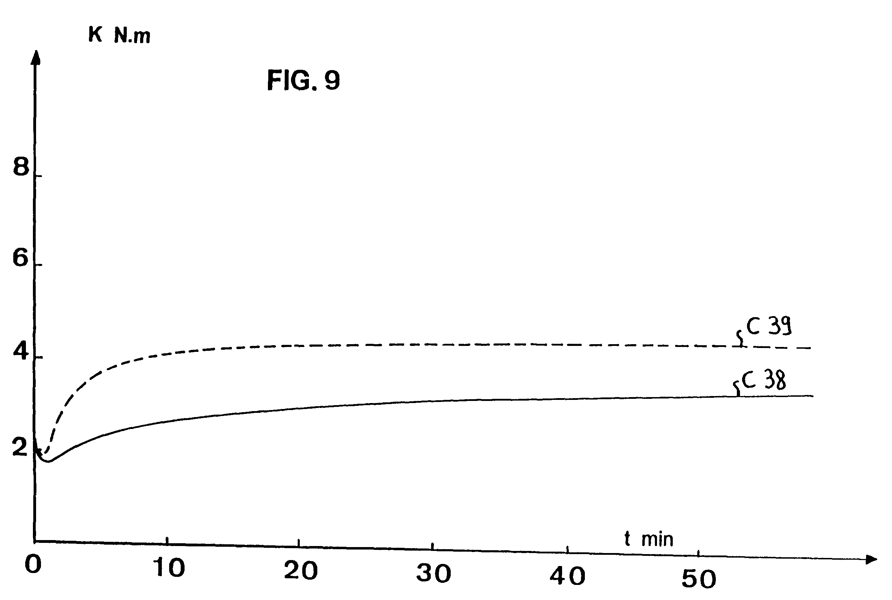

La figure 8 donne les courbes C 36 et C 37 correspondant respectivement aux compositions 36 et 37 et la figure 9 donne les courbes C38 et C39 correspondant respectivement aux compositions 38 et 39. Les abscisses et les ordonnées ont sur ces figures les mêmes significations que pour la figure 2.

Le tableau 19 donne les couples maxima ainsi obtenus (en N.m) de même que le temps (en minutes) au bout duquel ces maxima sont atteints.

**TABLEAU 19**

| N° de composition | 36 | 37 | 38 | 39 |
|---|---|---|---|---|
| Couple maximum (N.m) | 2,6 | 3,9 | 3,5 | 4,4 |
| Temps (minute) | >60 | 30 | >60 | 20 |

Ces courbes C36 à C39 et le tableau 19 montrent que les compositions 37 et 39 conformes à l'invention présentent un rendement et une vitesse de condensation des résines nettement plus élevés que les compositions témoins 36 et 38.

De préférence, la composition conforme à l'invention a les caractéristiques suivantes, avant durcissement :
- pour 100 parties en poids de la résine novolaque ou de l'ensemble des résines novolaques, le taux du durcisseur ou de l'ensemble des durcisseurs est compris entre 0,5 et 200 parties en poids, et plus préférentiellement entre 50 et 100 parties en poids ;
- pour 100 parties en poids de la résine novolaque ou de l'ensemble des résines novolaques, le taux du composé b) (comportant au moins un groupement 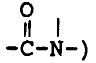 ou de l'ensemble des composés b) est compris entre 0,5 et 200 parties en poids, et plus préférentiellement entre 10 et 100 parties en poids, le ou les composés b) étant présents dans la composition ou susceptibles d'apparaître dans la composition après réaction du ou des réactifs donnant ce ou ces composés b).

De préférence dans le cas où la composition conforme à l'invention comporte un ou plusieurs caoutchoucs, on a les caractéristiques suivantes :
- pour 100 parties en poids du caoutchouc ou de l'ensemble des caoutchoucs, le taux de la résine novolaque ou de l'ensemble des résines novolaques est compris entre 1 et 50 parties en poids, et plus préférentiellement entre 2 et 20 parties en poids.

En résumé, l'invention permet d'obtenir les avantages suivants, et ceci de façon inattendue :
- on peut obtenir des mélanges à rigidité plus importante que dans les mélanges connus, pour un même taux de résine novolaque ;
- on peut diminuer la quantité de résine novolaque et/ou la quantité de soufre, pour la même rigidité que les mélanges connus ; ce qui permet entre autre de diminuer les coûts ;
- la vitesse de réaction de rigidification peut être plus rapide que dans les mélanges connus, ce qui permet également de diminuer les coûts, grâce à la diminution des temps de cuisson ;
- l'invention permet d'utiliser comme durcisseur des dérivés de la mélamine en remplacement de l'HMTA, tout en conservant de bonnes caractéristiques cinétiques pour la rigidification et de bonnes caractéristiques mécaniques, tout en supprimant la source d'ammoniac et donc les inconvénients qui y sont liés, par exemple une déchéance du collage entre un renfort métallique et le caoutchouc ;
- l'invention permet d'avoir une meilleure stabilité en rigidité après vieillissement thermo-oxydant grâce à la diminution du taux de soufre, par rapport aux compositions connues, tout en conservant des caractéristiques mécaniques proches de ou supérieures à celles des compositions connues.
   Le problème de la tenue au vieillissement thermo-oxydant est particulièrement important pour les enveloppes de pneumatiques qui sont soumises à des échauffements élevés au contact de l'air, en particulier les enveloppes de pneumatiques de véhicules poids lourds, de génie civil ou d'avions.

Bien entendu, l'invention n'est pas limitée aux exemples de réalisation précités.

## Revendications

1. Procédé pour durcir une composition contenant au moins une résine novolaque, caractérisé en ce que l'on utilise, en mélange avec la ou les résines novolaques
a) au moins un durcisseur choisi dans le groupe constitué par les mélamines substituées, ce durcisseur ayant la formule générale suivante : 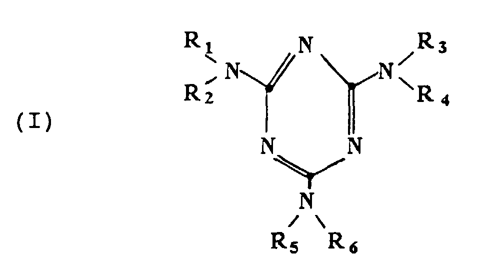 dans laquelle R₁, R₂, R₃, R₄, R₅ et R₆, identiques ou différents, sont choisis chacun dans le groupe constitué par -H, -CH₂OH, -CH₂OCH₃, -CH₂OCH₂OCH₃, au moins un des R₁ à R₆ étant différent de l'hydrogène ;
b) au moins un composé comportant au moins un groupement 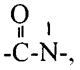 ce composé étant dépourvu de groupement méthylol et de groupement éther correspondant au méthylol, et/ou au moins un réactif susceptible de donner un tel composé lors du durcissement, ce ou ces composés étant représentés par une ou plusieurs des formules générales suivantes : 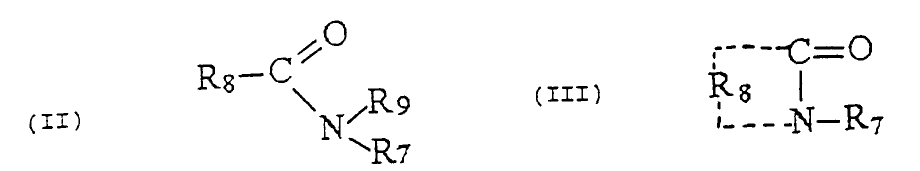 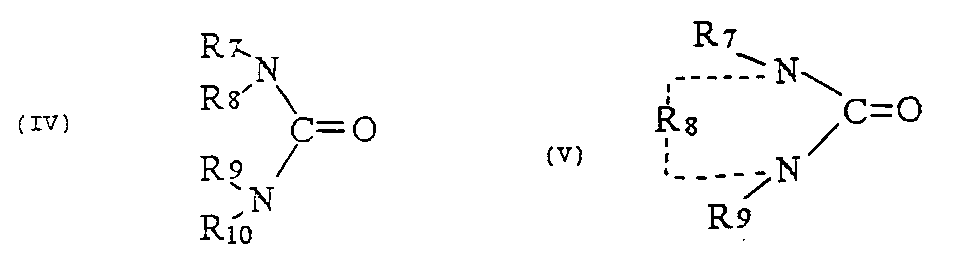 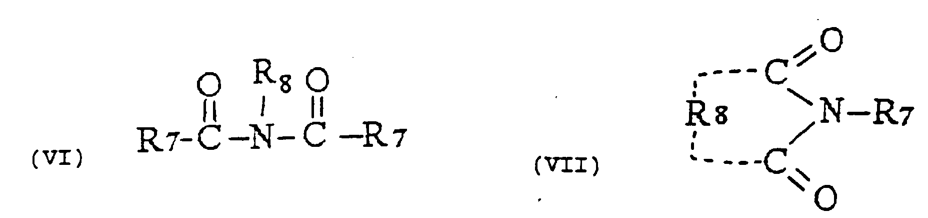 dans lesquelles R₇, R₈, R₉, R₁₀ sont choisis chacun dans le groupe constitué par -H et les radicaux hydrocarbonés saturés ou insaturés aliphatiques, cycliques ou aromatiques, R₇, R₈, R₉, R₁₀ pouvant être identiques ou différents, avec la condition que R₈ soit différent de -H dans les formules (III), (V) et (VII);
et en ce que l'on provoque, sous l'action de la chaleur, le durcissement de cette ou de ces résines.

2. Procédé selon la revendication 1, caractérisé en ce que le taux du durcisseur, ou de l'ensemble des durcisseurs, est compris entre 0,5 et 200 parties en poids, pour 100 parties en poids de la résine novolaque ou de l'ensemble des résines novolaques.

3. Procédé selon la revendication 2, caractérisé en ce que le taux du durcisseur, ou de l'ensemble des durcisseurs, est compris entre 50 et 100 parties en poids, pour 100 parties en poids de la résine novolaque ou de l'ensemble des résines novolaques.

4. Procédé selon l'une quelconque des revendications 1 à 3, caractérisé en ce que le taux du composé b), ou de l'ensemble des composés b), est compris entre 0,5 et 200 parties en poids, pour 100 parties en poids de la résine novolaque ou de l'ensemble des résines novolaques, le ou les composés b) étant présents dans la composition ou susceptibles d'apparaître dans la composition après réaction du ou des réactifs donnant ce ou ces composés b).

5. Procédé selon la revendication 4, caractérisé en ce que le taux du composé b), ou de l'ensemble des composés b), est compris entre 10 et 100 parties en poids, pour 100 parties en poids de la résine novolaque ou de l'ensemble des résines novolaques.

6. Procédé selon l'une quelconque des revendications 1 à 5, caractérisé en ce que la composition comporte au moins un ou plusieurs caoutchoucs.

7. Procédé selon la revendication 6, caractérisé en ce que le taux de la résine novolaque, ou de l'ensemble des résines novolaques, est compris entre 1 et 50 parties en poids, pour 100 parties en poids du caoutchouc, ou de l'ensemble des caoutchoucs.

8. Procédé selon la revendication 7, caractérisé en ce que le taux de la résine novolaque, ou de l'ensemble des résines novolaques, est compris entre 2 et 20 parties en poids, pour 100 parties en poids du caoutchouc, ou de l'ensemble des caoutchoucs.

9. Procédé selon l'une quelconque des revendications 6 à 8, caractérisé en ce que la composition comporte au moins un agent provoquant la réticulation du ou des caoutchoucs, et en ce que l'on provoque par la chaleur la rigidification de la composition, par suite à la fois du durcissement de la ou des résines et de la réticulation du ou des caoutchoucs.

10. Procédé selon la revendication 9, caractérisé en ce que ledit agent est le soufre.

11. Procédé selon la revendication 9, caractérisé en ce que ledit agent est un péroxyde.

12. Procédé selon l'une quelconque des revendications 9 à 11, caracterisé en ce que l'on utilise deux compositions de caoutchouc, une composition, dite "réceptrice", dépourvue d'au moins un des constituants définis par la résine novolaque, le durcisseur a), le composé b) ou le(s) réactif(s) susceptible(s) de donner le composé b), et une composition dite "émettrice" comportant le ou les constituants absents dans la composition réceptrice, en ce que l'on provoque la migration de ce ou de ces constituants, à partir de la composition émettrice, dans la composition réceptrice, et en ce que l'on provoque ensuite la rigidification de cette composition réceptrice.

13. Procédé selon l'une quelconque des revendications 1 à 12, caractérisé en ce qu'il est mis en oeuvre dans la préparation d'une enveloppe de pneumatiques.

14. Composition durcissable comportant, en mélange avec au moins une résine novolaque,
a) au moins un durcisseur choisi dans le groupe constitué par les mélamines substituées, ce durcisseur ayant la formule générale suivante : 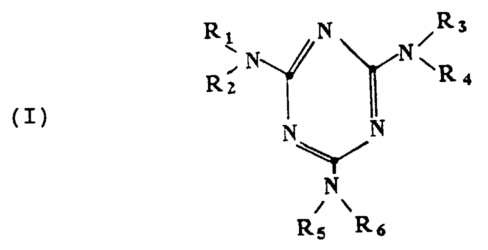 dans laquelle R₁, R₂, R₃, R₄, R₅ et R₆, identiques ou différents, sont choisis chacun dans le groupe constitué par -H, -CH₂OH, -CH₂OCH₃, -CH₂OCH₂OCH₃, au moins un des R₁ à R₆ étant différent de l'hydrogène ;
b) au moins un composé comportant au moins un groupement 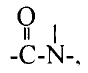 ce composé étant dépourvu de groupement méthylol et de groupement éther correspondant au méthylol, et/ou au moins un réactif susceptible de donner un tel composé lors du durcissement, ce ou ces composés étant représentés par une ou plusieurs des formules générales suivantes : 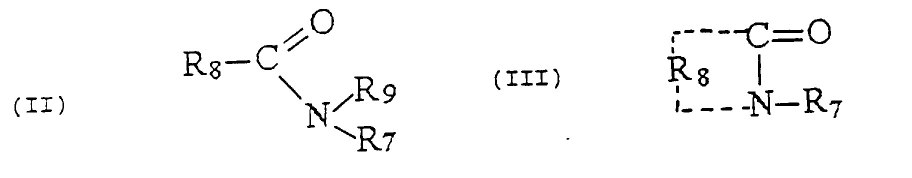 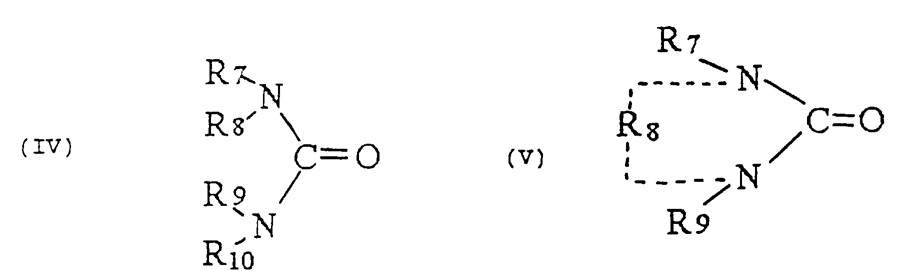 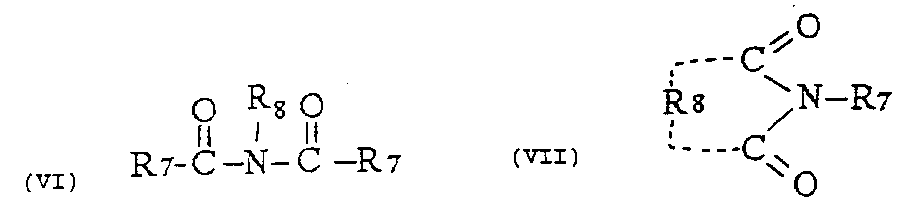 dans lesquelles R₇, R₈, R₉, R₁₀ sont choisis chacun dans le groupe constitué par -H et les radicaux hydrocarbonés saturés ou insaturés aliphatiques, cycliques ou aromatiques, R₇, R₈, R₉, R₁₀ pouvant être identiques ou différents, avec la condition que R₈ soit différent de -H dans les formules (III), (V) et (VII).

15. Composition selon la revendication 14, caractérisée en ce que le taux du durcisseur, ou de l'ensemble des durcisseurs, est compris entre 0,5 et 200 parties en poids, pour 100 parties en poids de la résine novolaque ou de l'ensemble des résines novolaques.

16. Composition selon la revendication 15, caractérisée en ce que le taux du durcisseur ou de l'ensemble des durcisseurs, est compris entre 50 et 100 parties en poids, pour 100 parties en poids de la résine novolaque ou de l'ensemble des résines novolaques.

17. Composition selon l'une quelconque des revendications 14 à 16, caractérisée en ce que le taux du composé b), ou de l'ensemble des composés b), est compris entre 0,5 et 200 parties en poids, pour 100 parties en poids de la résine novolaque ou de l'ensemble des résines novolaques, le ou les composés b) étant présents dans la composition ou susceptibles d'apparaître dans la composition après réaction du ou des réactifs donnant ce ou ces composés b).

18. Composition selon la revendication 17, caractérisée en ce que le taux du composé b) ou de l'ensemble des composés b), est compris entre 10 et 100 parties en poids, pour 100 parties en poids de la résine novolaque ou de l'ensemble des résines novolaques.

19. Composition selon l'une quelconque des revendications 14 à 18, caractérisée en ce qu'elle comporte au moins un caoutchouc.

20. Composition selon la revendication 19, caractérisée en ce que le taux de la résine novolaque, ou de l'ensemble des résines novolaques, est compris entre 1 et 50 parties en poids, pour 100 parties en poids du caoutchouc, ou de l'ensemble des caoutchoucs.

21. Composition selon la revendication 20, caractérisée en ce que le taux de la résine novolaque, ou de l'ensemble des résines novolaques, est compris entre 2 et 20 parties en poids, pour 100 parties en poids du caoutchouc, ou de l'ensemble des caoutchoucs.

22. Composition selon l'une quelconque des revendications 19 à 21, caractérisée en ce qu'elle comporte au moins un agent susceptible de provoquer la réticulation du ou des caoutchoucs.

23. Composition selon la revendication 22, caractérisée en ce que ledit agent est le soufre.

24. Composition selon la revendication 22, caractérisée en ce que ledit agent est un péroxyde.

25. Article obtenu par la mise en oeuvre du procédé selon l'une quelconque des revendications 1 à 13.

26. Article obtenu à partir d'une composition conforme à l'une quelconque des revendications 14 à 24.

27. Article selon l'une quelconque des revendications 25 ou 26, caractérisé en ce qu'il est une enveloppe de pneumatique.

## Patentansprüche

1. Verfahren zum Härten einer Zusammensetzung, die mindestens ein Novolak-Harz enthält, dadurch gekennzeichnet, daß man in Mischung mit dem Novolak-Harz oder den Novolak-Harzen das folgende benutzt:
a) mindestens einen Härter, der in der Gruppe ausgewählt ist, die von den substituierten Melaminen gebildet ist, wobei dieser Härter die folgende, allgemeine Formel aufweist: 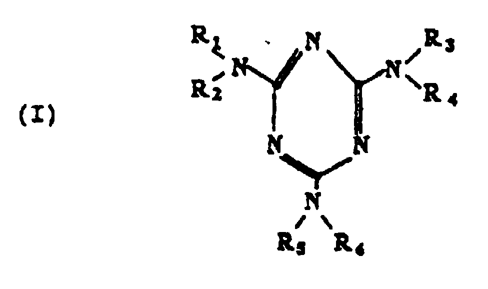 worin R₁, R₂, R₃, R₄, R₅ und R₆, die identisch oder unterschiedlich sind, jeweils in der Gruppe ausgewählt sind, die durch -H, -CH₂OH, -CH₂OCH₃, -CH₂OCH₂OCH₃, gebildet ist, wobei von R₁ bis R₆ mindestens einer gegenüber Wasserstoff unterschiedlich ist;
b) mindestens eine Komponente, die mindestens eine Formel 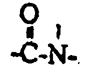 enthält, wobei diese Komponente keine Methylol-Gruppierung oder Äther-Gruppierung enthält, die dem Methylol entspricht, und/oder mindestens eine Reagenzie, die imstande ist, während des Aushärtens eine solche Komponente zu ergeben, wobei die oder diese Komponente(n) durch eine oder mehrere der folgenden, allgemeinen Formeln dargestellt ist: 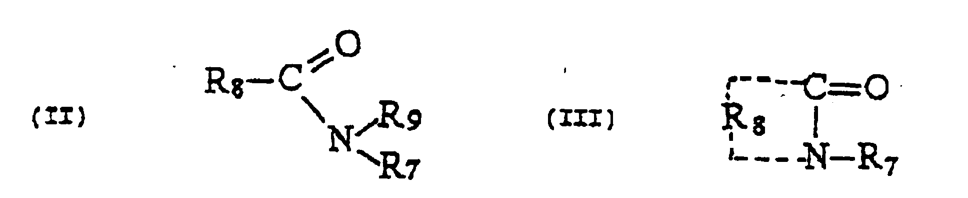 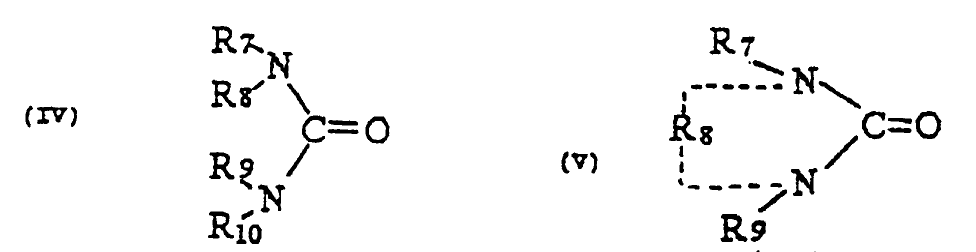 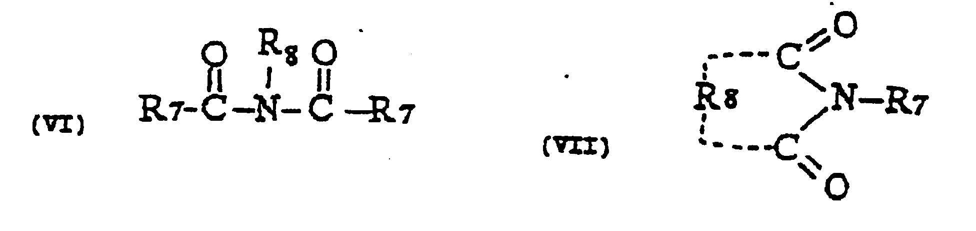 worin R₇, R₈, R₉, R₁₀ jeweils in der Gruppe ausgewählt sind, die durch -H und die hydrocarbonierten, gesättigten oder ungesättigten, aliphatischen, zyklischen oder aromatischen Radikalen gebildet ist, wobei R₇, R₈, R₉, R₁₀ identisch oder unterschiedlich sein können, unter der Bedingung, daß R₈ sich von -H in den Formeln (III), (V) und (VII) unterscheidet;
und daß man unter Einwirkung von Wärme die Aushärtung dieses Harzes oder dieser Harze hervorruft.

2. Verfahren nach Anspruch 1, dadurch gekennzeichnet, daß der Anteil des Härters oder der Gruppe von Härtern zwischen 0,5 und 200 Gewichtsteilen liegt, bezogen auf 100 Gewichtsteile des Novolak-Harzes oder der Gruppe von Novolak-Harzen.

3. Verfahren nach Anspruch 2, dadurch gekennzeichnet, daß der Anteil des Härters oder der Gruppe von Härtern zwischen 50 und 100 Gewichtsteilen liegt, bezogen auf 100 Gewichtsteile des Novolak-Harzes oder der Gruppe von Novolak-Harzen.

4. Verfahren nach irgendeinem der Ansprüche 1 bis 3, dadurch gekennzeichnet, daß der Anteil der Komponente b), oder der Gruppe von Komponenten b), zwischen 0,5 und 200 Gewichtsteilen liegt, bezogen auf 100 Gewichtsteile des Novolak-Harzes oder der Gruppe der Novolak-Harze, wobei die Komponente oder die Komponenten b) in der Zusammensetzung vorliegen oder imstande sind, in der Zusammensetzung nach der Reaktion der Reagenzie oder Reagenzien zu erscheinen, die diese Komponente oder Komponenten b) ergeben.

5. Verfahren nach Anspruch 4, dadurch gekennzeichnet, daß der Anteil der Komponente b) oder der Gruppe von Komponenten b) zwischen 10 und 100 Gewichtsteilen liegt, bezogen auf 100 Gewichtsteile des Novolak-Harzes oder der Gruppe von Novolak-Harzen.

6. Verfahren nach irgendeinem der Ansprüche 1 bis 5, dadurch gekennzeichnet, daß die Zusammensetzung mindestens einen oder mehrere Gummis aufweist.

7. Verfahren nach Anspruch 6, dadurch gekennzeichnet, daß der Anteil des Novolak-Harzes oder der Gruppe von Novolak-Harzen zwischen 1 und 50 Gewichtsteilen liegt, bezogen auf 100 Gewichtsteile des Gummis oder der Gruppe von Gummis.

8. Verfahren nach Anspruch 7, dadurch gekennzeichnet, daß der Anteil des Novolak-Harzes oder der Gruppe von Novolak-Harzen zwischen 2 und 20 Gewichtsteilen liegt, bezogen auf 100 Gewichtsteile des Gummis oder der Gruppe von Gummis.

9. Verfahren nach irgendeinem der Ansprüche 6 bis 8, dadurch gekennzeichnet, daß die Zusammensetzung mindestens ein Mittel aufweist, das die Vernetzung des oder der Gummis hervorruft, und daß an durch die Wärme die Versteifung der Zusammensetzung hervorruft, und zwar infolge gleichzeitig der Aushärtung des oder der Harze(s) und der Vernetzung des oder der Gummis.

10. Verfahren nach Anspruch 9, dadurch gekennzeichnet, daß das genannte Mittel Schwefel ist.

11. Verfahren nach Anspruch 9, dadurch gekennzeichnet, daß das genannte Mittel ein Peroxyd ist.

12. Verfahren nach irgendeinem der Ansprüche 9 bis 11, dadurch gekennzeichnet, daß man zwei Gummizusammensetzungen benutzt, wobei die eine Zusammensetzung, die "Empfänger" genannt wird, mindestens eines der Bestandteile nicht aufweist, die durch das Novolak-Harz definiert sind, und zwar den Härter a), die Komponente b) oder die Reagenzie(n), die in der Lage ist bzw. sind, die Komponente b) zu ergeben, und eine Zusammensetzung, die "Sender" genannt ist, das Bestandteil oder die Bestandteile aufweist, die in der Empfängerzusammensetzung abwesend sind, daß man die Migration des Bestandteils oder der Bestandteile aus der Senderzusammensetzung in die Empfängerzusammensetzung hervorruft, und daß man nachfolgend die Versteifung dieser Empfängerzusammensetzung hervorruft.

13. Verfahren nach irgendeinem der Ansprüche 1 bis 12, dadurch gekennzeichnet, daß es bei der Vorbereitung eines Reifenmantels eingesetzt wird.

14. Härtbare Zusammensetzung, die in Mischung mit mindestens einem Novolak-Harz die folgenden Merkmale aufweist:
a) mindestens einen Härter, der in der Gruppe ausgewählt ist, die von den substituierten Melaminen gebildet ist, wobei dieser Härter die allgemeine, folgende Formel aufweist: 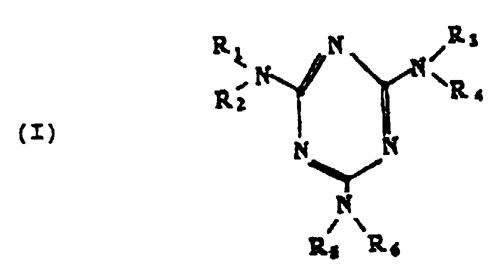 worin R₁, R₂, R₃, R₄, R₅ und R₆, die identisch oder unterschiedlich sind, jeweils in der Gruppe ausgewählt sind, die durch -H, -CH₂OH, -CH₂OCH₃, -CH₂OCH₂OCH₃, gebildet ist, wobei von R₁ bis R₆ mindestens eines unterschiedlich ist von Wasserstoff; und
b) mindestens eine Komponente mindestens eine Formel 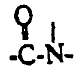 aufweist, wobei dieser Komponente eine Methylol-Gruppierung oder Äther-Gruppierung, die dem Methylol entspricht, fehlt und/oder mindestens eine Reagenzie, die imstande ist, eine solche Komponente während des Aushärtens zu ergeben, wobei die oder diese Komponenten durch eine oder mehrere der folgenden, allgemeinen Formeln dargestellt ist: 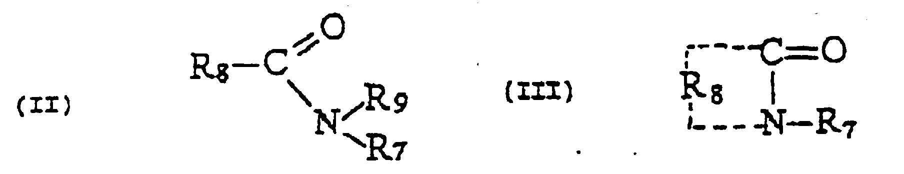 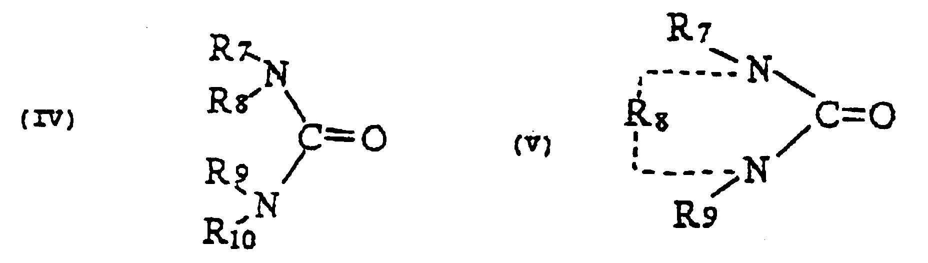 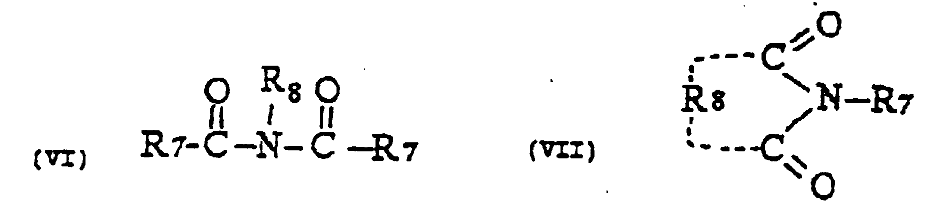 worin R₇, R₈, R₉, R₁₀ jeweils in der Gruppe ausgewählt sind, die durch -H und die hydrocarbonierten, gesättigten oder ungesättigten, aliphatischen, zyklischen oder aromatischen Radikalen gebildet ist, wobei R₇, R₈, R₉, R₁₀ identisch oder unterschiedlich sein können, unter der Bedingung, daß sich R₈ von -H in den Formeln (III), (V) und (VII) unterscheidet.

15. Zusammensetzung nach Anspruch 14, dadurch gekennzeichnet, daß der Anteil des Härters oder der Gruppe von Härtern zwischen 0,5 und 200 Gewichtsteilen auf 100 Gewichtsteile des Novolak-Harzes oder der Gruppe von Novolak-Harzen liegt.

16. Zusammensetzung nach Anspruch 15, dadurch gekennzeichnet, daß der Anteil des Härters oder der Gruppe von Härtern zwischen 50 und 100 Gewichtsteilen liegt, bezogen auf 100 Gewichtsteile des Novolak-Harzes oder der Gruppe von Novolak-Harzen.

17. Zusammensetzung nach irgendeinem der Ansprüche 14-16, dadurch gekennzeichnet, daß der Anteil der Komponente b) oder der Gruppe von Komponenten b) zwischen 0,5 und 200 Gewichtsteilen liegt, bezogen auf 100 Gewichtsteile des Novolak-Harzes oder der Gruppe von Novolak-Harzen, und daß die Komponente b) in der Zusammensetzung vorliegt oder imstande ist, in der Zusammensetzung nach der Reaktion des oder der Reagenzie(n) zu erscheinen, die diese Komponente b) ergibt.

18. Zusammensetzung nach Anspruch 17, dadurch gekennzeichnet, daß der Anteil der Komponente b) oder der Gruppe von Komponenten b) zwischen 10 und 100 Gewichtsanteilen liegt, bezogen auf 100 Gewichtsanteile des Novolak-Harzes oder der Gruppe aus Novolak-Harzen.

19. Zusammensetzung nach irgendeinem der Ansprüche 14 bis 18, dadurch gekennzeichnet, daß sie mindestens einen Gummi aufweist.

20. Zusammensetzung nach Anspruch 19, dadurch gekennzeichnet, daß der Anteil des Novolak-Harzes oder der Gruppe von Novolak-Harzen zwischen 1 und 50 Gewichtsteilen liegt, bezogen auf 100 Gewichtsteile des Gummis oder der Gruppe von Gummis.

21. Zusammensetzung nach Anspruch 20, dadurch gekennzeichnet, daß der Anteil des Novolak-Harzes oder der Gruppe von Novolak-Harzen zwischen 2 und 20 Gewichtsteilen liegt, bezogen auf 100 Gewichtsteile des Gummis oder der Gruppe von Gummis.

22. Zusammensetzung nach irgendeinem der Ansprüche 19 bis 21, dadurch gekennzeichnet, daß sie mindestens ein Mittel aufweist, das imstande ist, die Vernetzung des oder der Gummis hervorzurufen.

23. Zusammensetzung nach Anspruch 22, dadurch gekennzeichnet, daß das genannte Mittel Schwefel ist.

24. Zusammensetzung nach Anspruch 22, dadurch gekennzeichnet, daß das genannte Mittel ein Peroxyd ist.

25. Gegenstand, der durch das Einsetzen des Verfahrens nach irgendeinem der Ansprüche 1 bis 13 erhalten wurde.

26. Gegenstand, der nach einer Zusammensetzung nach irgendeinem der Ansprüche 14 bis 24 erhalten wurde.

27. Gegenstand nach irgendeinem der Ansprüche 25 oder 26, dadurch gekennzeichnet, daß er ein Reifenmantel ist.

## Claims

1. A process for hardening a composition containing at least one novolac resin, characterised in that, in mixture with the novolac resin or resins, there are used:
a) at least one hardener selected from the group consisting of substituted melamines, this hardener having the following general formula: 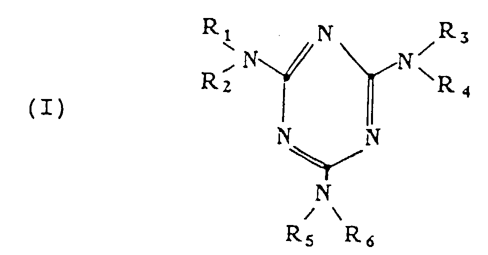 in which R₁, R₂, R₃, R₄, R₅ and R₆, which may be identical or different, are each selected from the group formed of -H, -CH₂OH, -CH₂OCH₃, -CH₂OCH₂OCH₃, at least one of the R₁ to R₆ being other than hydrogen;
b) at least one compound having at least one 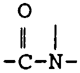 group, this compound being without methylol group and ether group corresponding to methylol, and/or at least one reagent capable of giving such a compound upon the hardening, this compound or these compounds being represented by one or more of the following general formulae: 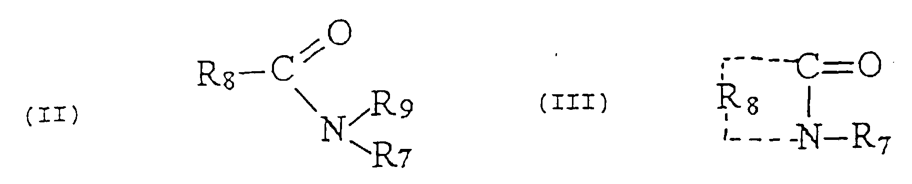 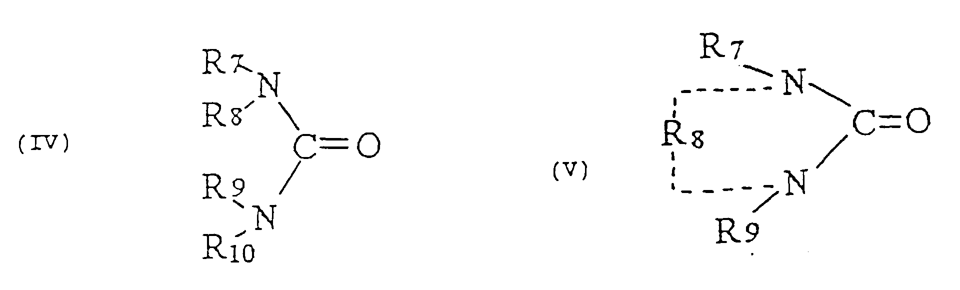 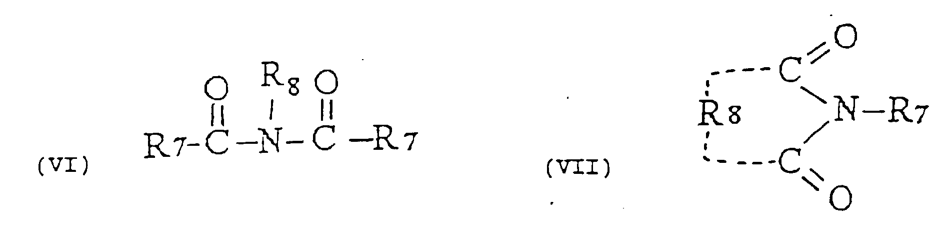 in which R₇, R₈, R₉, R₁₀ are each selected from the group formed of -H and saturated or unsaturated aliphatic, cyclic or aromatic hydrocarbon radicals, R₇, R₈, R₉, R₁₀ possibly being identical or different, with the proviso that R₈ is other than -H in formulae (III), (V) and (VII);
and in that the hardening of this resin or these resins is brought about under the action of heat.

2. A process according to Claim 1, characterised in that the content of hardener or of all the hardeners is between 0.5 and 200 parts by weight to 100 parts by weight of the novolac resin or of all the novolac resins.

3. A process according to Claim 2, characterised in that the content of hardener or of all the hardeners is between 50 and 100 parts by weight to 100 parts by weight of the novolac resin or of all the novolac resins.

4. A process according to any one of Claims 1 to 3, characterised in that the content of compound b) or of all the compounds b) is between 0.5 and 200 parts by weight, to 100 parts by weight of the novolac resin or of all the novolac resins, the compound or compounds b) being present in the composition or capable of appearing in the composition after reaction of the reagent or reagents producing this or these compounds b).

5. A process according to Claim 4, characterised in that the content of compound b) or of all the compounds b) is between 10 and 100 parts by weight to 100 parts by weight of the novolac resin or of all the novolac resins.

6. A process according to any one of Claims 1 to 5, characterised in that the composition comprises at least one or more rubbers.

7. A process according to Claim 6, characterised in that the content of novolac resin or of all the novolac resins is between 1 and 50 parts by weight to 100 parts by weight of the rubber or of all the rubbers.

8. A process according to Claim 7, characterised in that the content of novolac resin or of all the novolac resins is between 2 and 20 parts by weight to 100 parts by weight of the rubber or of all the rubbers.

9. A process according to any one of Claims 6 to 8, characterised in that the composition comprises at least one agent causing the cross-linking of the rubber or rubbers, and in that the stiffening of the composition is effected by heat as a result of both the hardening of the resin or resins and the cross-linking of the rubber or rubbers.

10. A process according to Claim 9, characterised in that said agent is sulphur.

11. A process according to Claim 9, characterised in that said agent is a peroxide.

12. A process according to any one of Claims 9 to 11, characterised in that two rubber compositions are used, one, so-called "receiving", composition, which is without at least one of the constituents defined by the novolac resin, the hardener a), the compound b) or the reagent(s) capable of producing the compound b), and one, so-called "emitting", composition, comprising the constituent(s) absent in the receiving composition, by causing the migration of this constituent or these constituents, from the emitting composition, into the receiving composition, and in that the stiffening of said receiving composition is then brought about.

13. A process according to any one of Claims 1 to 12, characterised in that it is used in the preparation of a tyre.

14. A hardenable composition comprising, in mixture with at least one novolac resin,
a) at least one hardener selected from the group consisting of substituted melamines, this hardener having the following general formula: 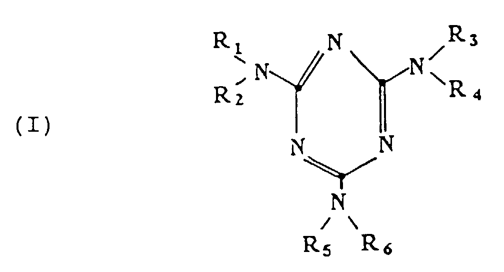 in which R₁, R₂, R₃, R₄, R₅ and R₆, which may be identical or different, are each selected from the group formed of -H, -CH₂OH, -CH₂OCH₃, -CH₂OCH₂OCH₃, at least one of the R₁ to R₆ being other than hydrogen;
b) at least one compound having at least one 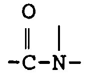 group, this compound being without methylol group and ether group corresponding to methylol, and/or at least one reagent capable of giving such a compound upon the hardening, this compound or these compounds being represented by one or more of the following general formulae: 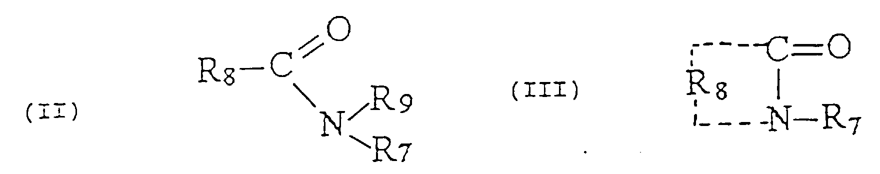 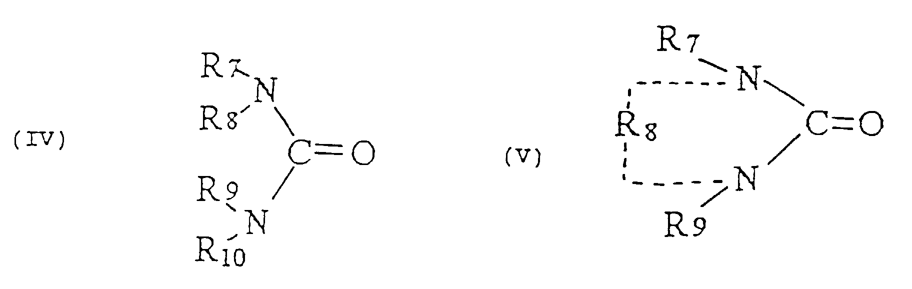 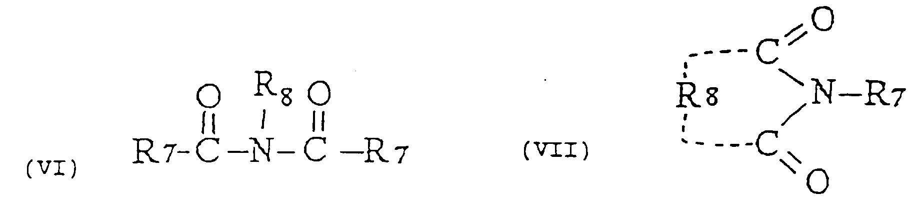 in which R₇, R₈, R₉, R₁₀ are each selected from the group formed of -H and saturated or unsaturated aliphatic, cyclic or aromatic hydrocarbon radicals, R₇, R₈, R₉, R₁₀ possibly being identical or different, with the proviso that R₈ is other than -H in formulae (III), (V) and (VII).

15. A composition according to Claim 14, characterised in that the content of hardener or of all the hardeners is between 0.5 and 200 parts by weight to 100 parts by weight of the novolac resin or of all the novolac resins.

16. A composition according to Claim 15, characterised in that the content of hardener or of all the hardeners is between 50 and 100 parts by weight to 100 parts by weight of the novolac resin or of all the novolac resins.

17. A composition according to any one of Claims 14 to 16, characterised in that the content of compound b) or of all the compounds b) is between 0.5 and 200 parts by weight to 100 parts by weight of the novolac resin or of all the novolac resins, the compound or compounds b) being present in the composition or capable of appearing in the composition after reaction of the reagent or reagents producing this compound or these compounds b).

18. A composition according to Claim 17, characterised in that the content of compound b) or of all the compounds b) is between 10 and 100 parts by weight to 100 parts by weight of the novolac resin or of all the novolac resins.

19. A composition according to any one of Claims 14 to 18, characterised in that it comprises at least one rubber.

20. A composition according to Claim 19, characterised in that the content of novolac resin or of all the novolac resins is between 1 and 50 parts by weight to 100 parts by weight of rubber or of all the rubbers.

21. A composition according to Claim 20, characterised in that the content of novolac resin or of all the novolac resins is between 2 and 20 parts by weight to 100 parts by weight of the rubber or of all the rubbers.

22. A composition according to any one of Claims 19 to 21, characterised in that it comprises at least one agent capable of causing the cross-linking of the rubber or rubbers.

23. A composition according to Claim 22, characterised in that said agent is sulphur.

24. A composition according to Claim 22, characterised in that said agent is a peroxide.

25. An article obtained by the carrying out of the process according to any one of Claims 1 to 13.

26. An article obtained from a composition according to any one of Claims 14 to 24.

27. An article according to any one of Claims 25 or 26, characterised in that it is a tyre.
